# EUROPEAN PATENT APPLICATION

(11) **EP 4 509 280 A1**
(43) Date of publication of application: **19.02.2025**
(21) Application number: 23806505.6
(22) Date of filing: 16.01.2023
(51) Int. Cl.: B25J 15/04

(54) **CONNECTOR, TOOLING DEVICE AND SORTING APPARATUS**

(30) Priority: 16.05.2022 CN 202210528041
(71) Applicant: Beijing Jingdong Qianshi Technology Co., Ltd., Beijing 100176 (CN)
(72) Inventor: CHEN, Ying, Beijing 100176 (CN)
(74) Representative: Page White Farrer
(86) International application number: PCT/CN2023/072442
(87) International publication number: WO 2023/221543

(57) **Abstract**

A connector includes: at least one first connection assembly (10) having a locking structure (12) and capable of realizing a detachable connection with a holder (30); and a second connection assembly (20) detachably connected with the first connection assembly (10); wherein the locking structure (12) is configured to lock the second connection assembly (20) connected with the first connection assembly (10) in a state that the first connection assembly (10) is disconnected from the holder (30), and to unlock the second connection assembly (20) connected with the first connection assembly (10) in a state that the first connection assembly (10) is connected with the holder (30). An end effector device and a sorting equipment also are provided.

## Description

### CROSS-REFERENCE TO RELATED APPLICATIONS

The present application is based on and claims priority to China Patent Application No. 202210528041.2 filed on May 16, 2022, the disclosure of which is incorporated by reference herein in its entirety.

### TECHNICAL FIELD

The present disclosure relates to a connector, an end effector device and a sorting equipment.

### BACKGROUND

In the scenario of picking and handling articles with a robot arm, one end effector cannot be adapted to all the sizes or weights of articles, so it is necessary to replace a corresponding end effector for operation so as to pick different articles. In some related technologies, a power quick-replace method is used, that is, an interlocking structure in an electric or pneumatic manner is used when the robot arm is disconnected from or connected with the end effector. In other related technologies, quick connection and disconnection between the robot arm and the end effector are realized by a quick-replace structure of magnetic inter-attraction.

### SUMMARY

The inventors have found through studies that, for the power quick-replace structure in the related art, it is necessary to add relevant power members to the robot arm so that the load of the robot arm will be increased, and it is necessary to increase the control signal feedback over control so that it is relatively complicated. Moreover, replacing the end effector takes a long time and involves a high cost. And when there is a heavy load on a quick-replace structure of magnetic inter-attraction in the related art, the end effector tends to fall off from the robot arm.

In view of this, the embodiment of the present disclosure provides a connector, an end effector device and a sorting equipment, which can realize more reliable and convenient detachable connection.

In one aspect of the present disclosure, a connector is provided. The connector includes: at least one first connection assembly having a locking structure and capable of realizing a detachable connection with the holder; and a second connection assembly detachably connected with the first connection assembly; wherein the locking structure is configured to lock the second connection assembly connected with the first connection assembly in a state that the first connection assembly is disconnected from the holder, and to unlock the second connection assembly connected with the first connection assembly in a state that the first connection assembly is connected with the holder.

In some embodiments, the first connection assembly includes: a connection seat having a first connection portion connected with the second connection assembly; wherein the locking structure includes: a locking seat and a locking member, wherein the locking seat is slidably connected with the connection seat, and the locking member is arranged between the locking seat and the connection seat, and the locking seat is moveable relative to the connection seat to drive the locking member to lock or unlock the second connection assembly.

In some embodiments, the locking seat has a first sliding position in a sliding direction relative to the connection seat, and there is a gap between the connection seat and the locking seat at the first sliding position so that the holder is connected with the first connection assembly within the gap.

In some embodiments, the locking seat has a second sliding position in the sliding direction relative to the connection seat, and abuts against the connection seat at the second sliding position when the first connection assembly is disconnected from the holder.

In some embodiments, the locking seat further has a second sliding position in the sliding direction relative to the connection seat, and the first connection assembly further includes: an elastic member connected with the locking seat and configured to cause the locking seat to slide from the first sliding position to the second sliding position when the holder is detached from the gap.

In some embodiments, the first connection assembly further includes a base support connected with the connection seat, and the base support has a flange protruding outwards radially relative to the connection seat; the elastic member includes: a spring sleeved outside the locking seat, one end of the spring is connected to the locking seat, and the other end is connected to the flange of the base support.

In some embodiments, the locking seat has a wedge-shaped surface inclined relative to the sliding direction of the locking seat and the connection seat, and the wedge-shaped surface pushes the locking member to adjust a position of the locking member relative to the locking seat and the second connection assembly so as to realize locking or unlocking of the second connection assembly by the locking member.

In some embodiments, the first connection portion includes an insertion hole, which is located at an end on one side of the connection seat adjacent to the second connection assembly, the locking seat is sleeved outside the connection seat, the wedge-shaped surface is located on an inner wall of the locking seat adjacent to the connection seat, and the locking member is located between the inner wall of the locking seat and an outer wall of the connection seat.

In some embodiments, the connection seat has a plurality of through holes penetrating through a hole wall of the insertion hole, the locking member includes a plurality of balls arranged in the through holes respectively, and the inner wall of the locking seat is divided into an avoidance area and a restriction area by the wedge surface in the sliding direction, the restriction area is configured to cause the plurality of balls protrude from the plurality of through holes when abutting against the plurality of balls, so as to lock a position of the second connection assembly in the insertion hole, and the avoidance area is configured to allow the plurality of balls to retreat from the plurality of through holes when abutting against the plurality of balls, so as to avoid the second connection assembly when the second connection assembly leaves the insertion hole.

In some embodiments, in a direction perpendicular to the sliding direction, a distance from the avoidance area to the connection seat is greater than the distance from the restriction area to the connection seat.

In some embodiments, the second connection assembly has an insertion cylinder including an annular recess that is continuous in a circumferential direction or a plurality of recesses that is distributed discretely in a circumferential direction, and the annular recess or the plurality of recesses are configured to align with the plurality of through holes when the insertion cylinder is inserted into a set position of the insertion hole, so that the plurality of balls protrude from the plurality of through holes after being abutted by the restriction area, and then enter the annular recess or the plurality of recesses, so as to lock the second connection assembly.

In some embodiments, inner walls of the plurality of through holes are frustum-shaped, and a side wall of the annular recess or side walls of the plurality of recesses are inclined outward relative to a bottom of the annular recess or the plurality of recesses.

In some embodiments, an opening size of each of the plurality of through holes in the inner wall of the insertion hole is smaller than a diameter of each of the plurality of balls located in the plurality of through holes respectively.

In some embodiments, a slide guiding structure is provided between the inner wall of the locking seat and the outer wall of the connection seat.

In some embodiments, the slide guiding structure includes: at least one elongated groove arranged on the inner wall of the locking seat, and an extending direction of the elongated groove being parallel to the sliding direction of the locking seat relative to the connection seat; wherein the slide guiding structure further includes: at least one lug fixedly arranged on the outer wall of the connection seat and slidably fit with the at least one elongated groove; and/or at least one bead rotatably arranged in at least one hole on the outer wall of the connection seat and scrollably fit with the at least one elongated groove.

In some embodiments, the first connection portion includes an insertion hole, which is located at an end on one side of the connection seat adjacent to the second connection assembly, and the second connection assembly has an insertion cylinder and a support flange fixedly connected with the insertion cylinder, and the support flange is configured to abut against the end when the insertion cylinder is inserted into a set position of the insertion hole.

In some embodiments, the end has a non-circular cross-section groove, and the support flange is embedded into the non-circular cross-section groove in a state of abutting against the end, and in contact with a side wall surface of the non-circular cross-section groove.

In some embodiments, the side wall of the non-circular cross-section groove is inclined outward relative to a bottom of the non-circular cross-section groove.

In some embodiments, the connector further includes: a holder provided with at least one U-shaped notch, wherein the U-shaped notch is configured to realize the connection between the holder and the first connection assembly after being entered by the first connection assembly and realize the disconnection between the holder and the first connection assembly after the first connection assembly leaves.

In some embodiments, the holder has at least one limiting structure configured to limit a motion of the first connection assembly in the U-shaped notch after the first connection assembly enters the U-shaped notch.

In some embodiments, the first connection assembly includes a connection seat having two sides parallel to an entering direction of the U-shaped notch, and at least one of the two sides has a concave structure; the limiting structure includes a spring bead mechanism located on at least one side of the U-shaped notch, and the spring bead mechanism is configured to be embedded into the concave structure after the first connection assembly enters the U-shaped notch.

In some embodiments, the connector further includes: a first sensor arranged on the holder and configured to detect at least the first connection assembly entering the U-shaped notch to determine whether the first connection assembly enters the U-shaped notch at a correct angle.

In some embodiments, the first connection assembly includes a connection seat, the second connection assembly includes a support flange, and a structure when the connection seat and the support flange are in an abutting state has an anterior structure and an posterior structure that are asymmetrical in an entering direction of the U-shaped notch.

In some embodiments, a posterior structure of the connection seat and the support flange in an entering direction of the U-shaped notch has concave notches.

In some embodiments, the connector further includes: a second sensor arranged on the second connection assembly and configured to detect the first connection assembly to determine whether the first connection assembly is connected with the second connection assembly.

In some embodiments, the first connection assembly has a first cavity structure, the second connection assembly has a second cavity structure, and the first cavity structure and the second cavity structure communicate with each other in a connected state of the second connection assembly and the first connection assembly.

In some embodiments, the second connection assembly includes an insertion cylinder having the second cavity structure; and the first connection assembly includes: a connection seat provided with an insertion hole for accommodating the insertion cylinder; a sealing gasket located in the insertion hole; and a base support connected with the connection seat and located on one side of the sealing gasket away from the insertion cylinder, wherein the base support has the first cavity structure, and the base support and the insertion cylinder abut against end faces on opposite sides of the sealing gasket respectively.

In one aspect of the present disclosure, an end effector device is provided. The end effector device includes: the aforementioned connector; and a pickup mechanism connected with the first connection assembly of the connector.

In some embodiments, the pickup mechanism includes a suction cup or a suction cup group.

In one aspect of the present disclosure, a sorting equipment is provided. The sorting equipment includes: the aforementioned end effector device; and a robot arm connected with a second connection assembly of the connector of the end effector device and configured to cause the second connection assembly to be connected to or disconnected from any first connection assembly of the connector.

In one aspect of the present disclosure, an end effector quick-replace member is provided. The end effector quick-replace member includes: a connection seat having a first connection portion; a locking seat slidably connected with the connection seat; and a locking member arranged between the locking seat and the connection seat; wherein the locking seat is configured to drive the locking member to lock or unlock an end effector adapter connected with the first connection portion by means of a motion related to the connection seat.

In some embodiments, the locking seat has a first sliding position and a second sliding position in a sliding direction relative to the connection seat, and there is a gap for entering of a holder between the connection seat and the locking seat at the first sliding position, and the locking seat abuts against the connection seat at the second sliding position, and the locking seat abuts against the connection seat at the second sliding position; the end effector quick-replace member further includes: an elastic member connected with the locking seat and configured to cause the locking seat to slide from the first sliding position to the second sliding position when the holder is detached from the gap.

In some embodiments, the locking seat has a wedge-shaped surface inclined relative to the sliding direction of the locking seat and the connection seat, and the wedge-shaped surface pushes the locking member to adjust a position of the locking member relative to the locking seat and the end effector adapter so as to realize locking or unlocking the end effector adapter by the locking member.

In some embodiments, the first connection portion includes an insertion hole located at an end of the connection seat, the locking seat is sleeved outside the connection seat, the wedge-shaped surface is located on an inner wall of the locking seat adjacent to the connection seat, and the locking member is located between the inner wall of the locking seat and an outer wall of the connection seat.

In some embodiments, the connection seat has a plurality of through holes penetrating through a hole wall of the insertion hole, the locking member includes a plurality of balls arranged in the through holes respectively, and the inner wall of the locking seat is divided into an avoidance area and a restriction area by the wedge surface in the sliding direction, the restriction area is configured to cause the plurality of balls protrude from the plurality of through holes when abutting against the plurality of balls, so as to lock the position of the end effector adapter in the insertion hole, and the avoidance area is configured to allow the plurality of balls to retreat from the plurality of through holes when abutting against the plurality of balls, so as to avoid the end effector adapter when the end effector adapter leaves the insertion hole.

In some embodiments, in a direction perpendicular to the sliding direction, a distance from the avoidance area to the connection seat is greater than a distance from the restriction area to the connection seat.

In some embodiments, inner walls of the plurality of through holes are frustum-shaped.

In some embodiments, an opening size of each of the plurality of through holes in the inner wall of the insertion hole is smaller than a diameter of each of the plurality of balls located in the plurality of through holes respectively.

In some embodiments, a slide guiding structure is provided between the inner wall of the locking seat and the outer wall of the connection seat.

In some embodiments, the slide guiding structure includes: at least one elongated groove arranged on the inner wall of the locking seat, and an extending direction of the elongated groove being parallel to the sliding direction of the locking seat relative to the connection seat; wherein the slide guiding structure further includes: at least one lug fixedly arranged on the outer wall of the connection seat and slidably fit with the at least one elongated groove; and/or at least one bead rotatably arranged in at least one hole on the outer wall of the connection seat and scrollably fit with the at least one elongated groove.

In some embodiments, the end has a non-circular section groove.

In some embodiments, the side wall of the non-circular section groove is inclined outward relative to a bottom of the non-circular section groove.

In some embodiments, the end effector quick-replace member further includes: a pickup mechanism connected with one side of the connection seat away from the end.

In some embodiments, the end effector quick-replace member further includes: a sealing gasket arranged in the insertion hole and abutting against the pickup mechanism.

In one aspect of the present disclosure, an end effector adapter is provided for selective connection with at least one end effector quick-replace member located on a holder, wherein the end effector quick-replace member is the aforementioned end effector quick-replace member.

In some embodiments, the pickup connector includes: an insertion cylinder configured to connect the end effector quick-replace member; and a support flange fixedly connected with the insertion cylinder.

Therefore, according to the embodiment of the present disclosure, the locking mechanism in the first connection assembly locks the second connection assembly connected with the first connection assembly when the first connection assembly is disconnected from the holder, thereby avoiding that the first connection assembly is disconnected from the second connection assembly after being disconnected from the holder, and ensuring a reliable connection. The locking mechanism unlocks the second connection assembly when the first connection assembly is connected with the holder, so that the second connection assembly may be freely connected with and disconnected from the first connection assembly arranged on the holder, which is convenient for replacing the first connection assembly connected with the second connection assembly. Compared with the power quick-replace structure in the related art, when the embodiment of the present disclosure is applied to the robot arm and the end effector, there is no need to rely on a power member to realize the locking or unlocking between the end effector and the robot arm, so as to reduce the problems such as load, structural design and control design brought by a power member, thereby simplifying the structure, reducing the cost and improving the efficiency. Compared with the structure of magnetic inter-attraction in the related art, the connection in the embodiment of the present disclosure is more stable and reliable.

### BRIEF DESCRIPTION OF THE DRAWINGS

The accompanying drawings which constitute part of this specification, describe the embodiments of the present disclosure, and together with this specification, serve to explain the principles of the present disclosure.

The present disclosure may be more explicitly understood from the following detailed description with reference to the accompanying drawings, in which:
Fig. 1 is a schematic structural view in some embodiments of a sorting equipment according to the present disclosure;
Fig. 2 is a schematic view of an exploded structure when a robot arm is connected in some embodiments of an end effector device according to the present disclosure;
Fig. 3 is a schematic view of placing an end effector device into a holder when a robot arm is connected in some embodiments of an end effector device according to the present disclosure;
Fig. 4 is a schematic view of an exploded structure in some embodiments of a connector according to the present disclosure;
Fig. 5 is a schematic longitudinal sectional view of Fig. 4;
Figs. 6 and 7 are respectively schematic longitudinal sectional views in some embodiments of a connector according to the present disclosure in a first sliding position S1 and a second sliding position S2;
Fig. 8 is a schematic view of not fully inserting an insertion cylinder into an insertion hole in some embodiments of a connector according to the present disclosure;
Fig. 9 is a schematic view of fully inserting an insertion cylinder into the insertion hole in some embodiments of a connector according to the present disclosure;
Fig. 10 is a schematic structural view of a locking seat in some embodiments of a connector according to the present disclosure;
Fig. 11 is a schematic structural view of a connection seat in some embodiments of a connector according to the present disclosure;
Figs. 12 to 14 are respectively schematic views of three states in which the end effector device is placed into the holder and the end effector device is separated when a robot arm is connected in some embodiments of an end effector device according to the present disclosure;
Fig. 15 is a schematic perspective view of entering a U-shaped notch of the holder in some embodiments of an end effector device according to the present disclosure;
Figs. 16 to 17 are respectively schematic views of a top view angle of not fully entering a U-shaped notch and fully entering a U-shaped notch respectively in some embodiments of an end effector device according to the present disclosure.

It should be understood that the dimensions of various parts shown in the accompanying drawings are not drawn according to actual proportional relations. In addition, the same or similar members are denoted by the same or similar reference signs.

### DETAILED DESCRIPTION

Various exemplary embodiments of the present disclosure will now be described in detail with reference to the accompanying drawings. The description of the exemplary embodiments is merely illustrative and is in no way intended as a limitation to the present disclosure, its application or use. The present disclosure may be implemented in many different forms, which are not limited to the embodiments described herein. These embodiments are provided to make the present disclosure thorough and complete, and fully convey the scope of the present disclosure to those skilled in the art. It should be noticed that: relative arrangement of members and steps, material composition, numerical expressions, and numerical values set forth in these embodiments, unless specifically stated otherwise, should be explained as merely illustrative, and not as a limitation.

The use of the terms "first", "second" and similar words in the present disclosure do not denote any order, quantity or importance, but are merely used to distinguish between different parts. A word such as "comprise", "have" or variants thereof means that the element before the word covers the element(s) listed after the word without excluding the possibility of also covering other elements. The terms "up", "down", "left", "right", or the like are used only to represent a relative positional relationship, and the relative positional relationship may also be changed correspondingly if the absolute position of the described object changes.

In the present disclosure, when it is described that a particular device is located between the first device and the second device, there may be an intermediate device between the particular device and the first device or the second device, and alternatively, there may be no intermediate device. When it is described that a particular device is connected to other devices, the particular device may be directly connected to said other devices without an intermediate device, and alternatively, may not be directly connected to said other devices but with an intermediate device.

All the terms (including technical and scientific terms) used in the present disclosure have the same meanings as understood by those skilled in the art of the present disclosure unless otherwise defined. It should also be understood that terms as defined in general dictionaries, unless explicitly defined herein, should be interpreted as having meanings that are consistent with their meanings in the context of the relevant art, and not to be interpreted in an idealized or extremely formalized sense.

Techniques, methods, and apparatus known to those of ordinary skill in the relevant art may not be discussed in detail, but where appropriate, these techniques, methods, and apparatuses should be considered as part of this specification.

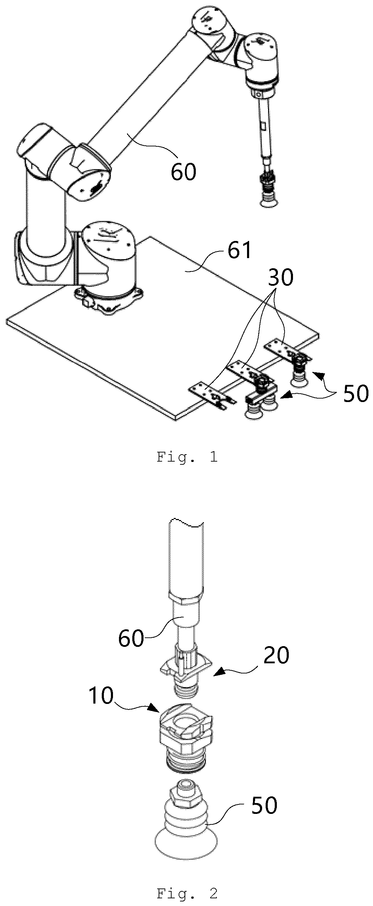

Fig. 1 is a schematic structural view in some embodiments of a sorting equipment according to the present disclosure. Referring to Fig. 1, the embodiment of the present disclosure provides a sorting equipment, including: an end effector device and a robot arm 60. The end effector device includes two structural parts, in which the first structural part is connected with the robot arm 60 and driven by the robot arm 60, and the second structural part which may pick up an article, may be disconnected from the first structural part, thereby realizing the replacement of the second structural part.

In Fig. 1, the robot arm 60 may be arranged on a platform 61, and has an arm joint that may realize multiple degrees of freedom and a driving unit to realize the motion of the end effector device in different spatial positions, so as to realize the operations such as picking up, conveying and releasing an article. The second structural part may be held by one or more holders 30, and in Fig. 1, a plurality of holders 30 are fixedly connected to the platform 61 by a connecting piece such as a screw or by welding and the like.

The first structural part here may be referred to as the end effector adapter, and the second structural part may be referred to as the end effector quick-replace member. The end effector structure may selectively connect at least one end effector quick-replace member located on the holder 30. The end effector quick-replace member and the pickup mechanism 50 may be integrally arranged or independently arranged. In some embodiments, the end effector quick-replace member includes a pickup mechanism 50. In other embodiments, the end effector quick-replace member does not include a pickup mechanism 50.

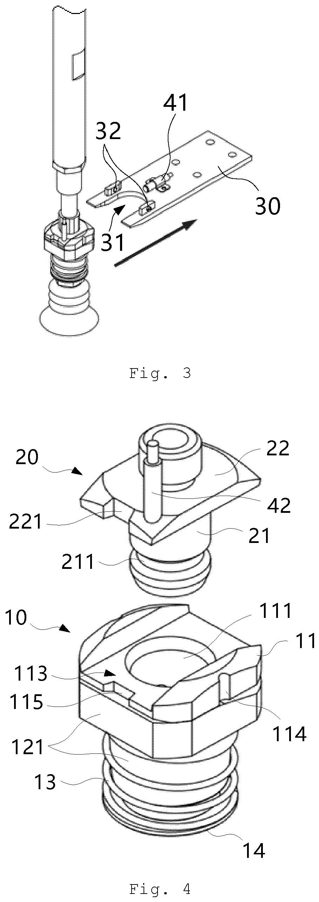

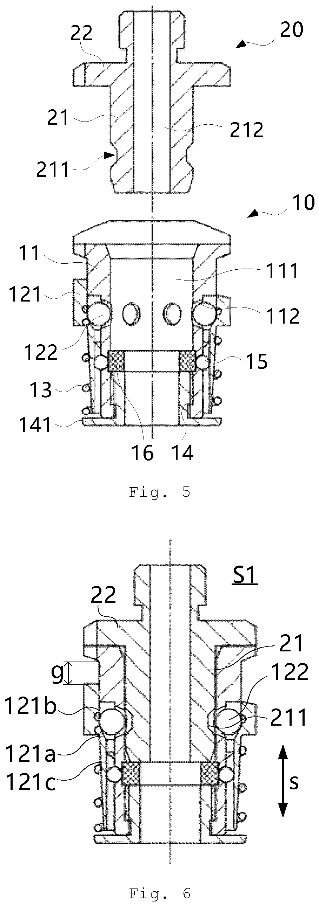

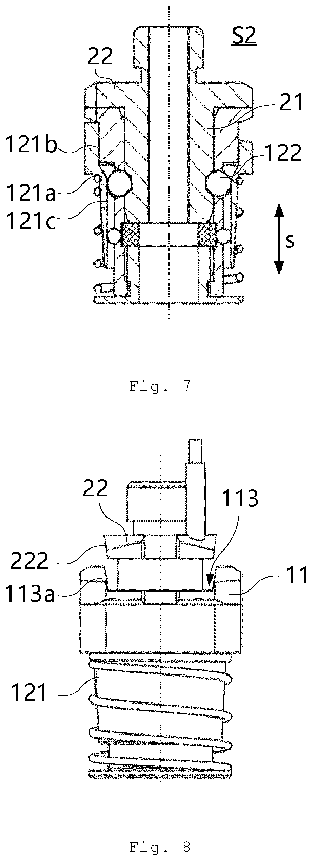

Fig. 2 is a schematic view of an exploded structure when a robot arm is connected in some embodiments of an end effector device according to the present disclosure. Fig. 3 is a schematic view of placing an end effector device into a holder when a robot arm is connected in some embodiments of an end effector device according to the present disclosure. Fig. 4 is a schematic view of an exploded structure in some embodiments of a connector according to the present disclosure. Fig. 5 is a schematic longitudinal sectional view of Fig. 4. Figs. 6 and 7 are respectively schematic longitudinal sectional views in some embodiments of a connector according to the present disclosure in a first sliding position S1 and a second sliding position S2.

Referring to Figs. 2 and 3, the embodiment of the present disclosure provides an end effector device, which may be applied in, but not limited to, the aforementioned sorting mechanism embodiment. The end effector device includes: a connector and a pickup mechanism 50. The pickup mechanism 50 may be connected with some structures in the connector.

For the application scenario where the connector is used to pick up an object with a relatively flat surface, a suction cup structure may be used to reliably suck the object. In some embodiments, the pickup mechanism 50 includes a suction cup or a suction cup group. The suction cup or suction cup group is connected with an air path, which may be formed in the connector, and the air path may be further connected with a vacuum device, so as to realize the vacuum suction effect of the suction cup on the object by evacuation. In Fig. 1, the pickup mechanism 50 may include a single suction cup or a suction cup group with at least two suction cups connected in parallel.

Referring to Figs. 4 to 7, the embodiment of the present disclosure also provides a connector, which may be applied in, but not limited to, the aforementioned end effector device. The connector includes: at least one first connection assembly 10 and a second connection assembly 20. The at least one first connection assembly 10 has a locking structure 12 and may be detachably connected with the holder 30. The second connection assembly 20 is detachably connected with the first connection assembly 10.

The locking structure 12 is configured to lock the second connection assembly 20 connected with the first connection assembly 10 in a state where the first connection assembly 10 is disconnected from the holder 30, and unlock the second connection assembly 20 connected with the first connection assembly 10 in a state where the first connection assembly 10 is connected with the holder 30.

In this embodiment, the locking mechanism in the first connection assembly 10 locks the second connection assembly 20 connected with the first connection assembly 10 when the first connection assembly 10 is disconnected from the holder 30, thereby avoiding that the first connection assembly 10 is disconnected from the second connection assembly 20 after being disconnected from the holder 30 and ensuring a reliable connection. The locking mechanism unlocks the second connection assembly 20 when the first connection assembly 10 is connected with the holder 30. In this way, it is possible to that the second connection assembly 20 is freely connected with and disconnected from the first connection assembly 10 arranged on the holder 30, which facilitates the replacement of the first connection assembly 10 connected with the second connection assembly 20.

Compared with the power quick-replace structure in the related art, when the embodiment of the present disclosure is applied to the robot arm and the end effector, there is no need to rely on a power member to realize the locking or unlocking between the end effector and the robot arm, so as to reduce the problems such as load, structural design and control design brought by a power member, thereby simplifying the structure, reducing the cost and improving the efficiency. Compared with the structure of magnetic inter-attraction in the related art, the connection in the embodiment of the present disclosure is more stable and reliable.

Referring to Figs. 4 and 5, in some embodiments, the first connection assembly 10 includes: a connection seat 11. The connection seat 11 has a first connection portion connected with the second connection assembly 20. The locking structure 12 includes: a locking seat 121 and a locking member 122, and the locking seat 121 is slidably connected with the connection seat 11. Their sliding directions s are indicated by the black doubleheaded arrow in Figs. 6 and 7. The locking member 122 is arranged between the locking seat 121 and the connection seat 11, and the locking seat 121 is moveable relative to the connection seat 11 so as to drive the locking member 122 to lock or unlock the second connection assembly 20.

The first connection portion of the connection seat 11 is connected with the second connection assembly 20, and the locking seat 121 in the locking structure 12 slides relative to the connection seat 11 to implement that the locking member 122 locks or unlocks the second connection assembly 20. In this way, the sliding action between the connection seat 11 in the first connection assembly 10 and the locking seat 121 may be converted into the locking or unlocking of the second connection assembly 20 by the locking member 122. Therefore, the locking and unlocking function may be realized by changing the relative position relationship between the first connection assembly 10 and the holder 30, and the mechanical fit structure may realize the locking and unlocking function without other additional devices such as a power unit.

Referring to Fig. 6, in some embodiments, the locking seat 121 has a first sliding position S1 in the sliding direction s relative to the connection seat 11, and there is a gap g between the connection seat 11 and the locking seat 121 at the first sliding position S1 so that the holder 30 is connected with the first connection assembly 10 in the gap g.

For the structure in which the locking seat 121 is slidable relative to the connection seat 11, the first sliding position S1 defines a gap g formed between the locking seat 121 and the connection seat 11 for connection of the holder 30 with the first connection assembly 10 in this gap g. In this way, the holder 30 located in the gap g may define the relative position of the locking seat 121 and the connection seat 11, and the unlocking relationship between the second connection assembly 20 and the first connection assembly 10 may be realized at this time.

Referring to Fig. 7, in some embodiments, the locking seat 121 has a second sliding position S2 in the sliding direction s relative to the connection seat 11, and abuts against the connection seat 11 at the second sliding position S2 when the first connection assembly 10 is disconnected from the holder 30. For the structure in which the locking seat 121 is slidable relative to the connection seat 11, the second sliding position S2 defines the state that the first connection assembly 10 is disconnected from the holder 30, and the locking relationship between the second connection assembly 20 and the first connection assembly 10 is realized at this time.

For the structure in which the locking seat 121 is slidable relative to the connection seat 11, in order to facilitate realizing the locking between the first connection assembly 10 and the second connection assembly 20 after the first connection assembly 10 is disconnected from the holder 30, referring to Figs. 6 and 7, in some embodiments, the first connection assembly 10 further includes: an elastic member 13. The elastic member 13 is connected with the locking seat 121 and configured such that the locking seat 121 slides from the first sliding position S1 to the second sliding position S2 when the holder 30 is detached from the gap g.

The elastic force of the elastic member 13 automatically allows that the locking seat 121 slides from the first sliding position S1 to the second sliding position S2 when the holder 30 is detached from the gap g, which is more reliable and concise in structural realization, and allows that the locking seat slides relative to the connection seat without relying on a power mechanism.

In order to enable the elastic member 13 to stably apply to the locking seat 121an elastic force directed to the second sliding position S2, referring to Figs. 5 to 7, in some embodiments, the first connection assembly 10 further includes: a base support 14 connected with the connection seat 11, and the base support 14 has a flange 141 protruding radially outwards relative to the connection seat 11. The elastic member 13 includes: a spring sleeved outside the locking seat 121, wherein one end of the spring is connected to the locking seat 121, and the other end is connected to the flange 141 of the base support 14.

The flange 141 on the base support 14 connected with the connection seat 11 fixes one end of the spring, and the other end of the spring is connected with the locking seat 121, so that the spring may move the locking seat 121 toward the connection seat 11 through elastic force, and eliminate the gap g formed between the locking seat 121 and the connection seat 11 at the first sliding position S1 when the locking seat 121 is not pressed by the holder 30.

Referring to Figs. 6 and 7, in some embodiments, the locking seat 121 has a wedge-shaped surface 121a inclined relative to the sliding direction s of the locking seat 121 and the connection seat 11, and the wedge-shaped surface 121a pushes the locking member 122 to adjust a position of the locking member 122 relative to the locking seat 121 and the second connection assembly 20 so as to realize locking or unlocking the second connection assembly 20 by the locking member 122.

The wedge-shaped surface 121a of the locking seat 121 may press the locking member 122 along with the sliding of the locking seat 121, and displace the locking member 122 in a direction that is not parallel to the sliding direction s, so as to lock or unlock the second connection assembly 20 by displacing the locking member 122 in this direction.

Referring to Figs. 4 to 7, in some embodiments, the first connection portion includes an insertion hole 111, which is located at the end on one side of the connection seat 11 adjacent to the second connection assembly 20, the locking seat 121 is sleeved outside the connection seat 11, the wedge-shaped surface 121a is located on the inner wall of the locking seat 121 adjacent to the connection seat 11, and the locking member 122 is located between the inner wall of the locking seat 121 and the outer wall of the connection seat 11.

A gap g for accommodating the locking member 122 is formed between the locking seat 121 sleeved outside the connection seat 11 and the connection seat 11, and the locking member 122 may restrict the second connection assembly 20 entering the insertion hole 111 along with the sliding of the locking seat 121 relative to the connection seat 11, thereby locking or unlocking the second connection assembly 20. In other embodiments, the connection seat may also be sleeved outside the locking seat, or other fit structures may be used.

In order to allow the locking member 122 to act on the second connection assembly 20 more conveniently and realize the locking or unlocking of the relative position between the second connection assembly 20 and the insertion hole 111, referring to Figs. 5 to 7, in some embodiments, the connection seat 11 has a plurality of through holes 112 penetrating through a hole wall of the insertion hole 111, the locking member 122 includes a plurality of balls arranged in the through holes 112 respectively, and the inner wall of the locking seat 121 is divided into an avoidance area 121b and a restriction area 121c by the wedge surface 121a in the sliding direction S.

The restriction area 121c is configured to cause the plurality of balls protrude from the plurality of through holes 112 when abutting against the plurality of balls, so as to lock a position of the second connection assembly 20 in the insertion hole 111. The avoidance area 121b is configured to allow the plurality of balls to retreat from the plurality of through holes 112 when abutting against the plurality of balls, so as to avoid the second connection assembly 20 when the second connection assembly 20 leaves the insertion hole 111.

The locking member 122 in the form of a ball flexibly moves from the through hole arranged in the hole wall of the connection seat 11, and may protrude from the through hole to lock the position of the second connection assembly 20 in the insertion hole 111. The locking member 122 in the form of a ball may move laterally inward under the pressure of the wedge-shaped surface 121a, and form an interference relationship with the second connection assembly 20 under the abutting action of the restriction area 121c, so that the second connection assembly 20 cannot be disconnected from the insertion hole 111.

When the wedge-shaped surface 121a leaves the restricting position of the locking member 122 in the form of a ball so that the avoidance area 121b directly faces towards the locking member 122, the locking member 122 in the form of a ball may more easily retreat to a position without affecting the disconnection of the second connection assembly 20 from the insertion hole 111 by pulling out the second connection assembly 20, thereby smoothly realizing the unlocking.

In order to allow the avoidance area 121b and the restriction area 121c to realize the functions of avoiding the locking member 122 and restricting the position of the locking member 122 respectively, referring to Figs. 6 and 7, in some embodiments, in the direction perpendicular to the sliding direction s, a distance from the avoidance area 121b to the connection seat 11 is greater than a distance from the restriction area 121c to the connection seat 11.

In the direction perpendicular to the sliding direction s, the distance from the avoidance area 121b to the connection seat 11 is greater than the distance from the restriction area 121c to the connection seat 11. The distance from the avoidance area 121b to the connection seat 11 here is the shortest distance from a portion of the inner wall of the locking seat 121 corresponding to the avoidance area 121b to the outer wall of the connection seat 11, and the distance from the restriction area 121c to the connection seat 11 is the shortest distance from a portion of the inner wall of the locking seat 121 corresponding to the restriction area 121c to the outer wall of the connection seat 11.

In order to enable the first connection assembly 10 having the insertion hole 111 to form a reliable connection relationship with the second connection assembly 20, referring to Figs. 4 to 7, in some embodiments, the second connection assembly 20 has an insertion cylinder 21 including an annular recess 211 that is continuous in a circumferential direction or a plurality of recesses that is distributed discretely in a circumferential direction. The annular recess 211 or the plurality of recesses are configured to align with the plurality of through holes 112 when the insertion cylinder 21 is inserted into a set position of the insertion hole 111, so that the plurality of balls protrude from the plurality of through holes 112 after being abutted by the restriction area 121c, and then enter the annular recess 211 or the plurality of recesses, so as to lock the second connection assembly 20.

The insertion cylinder 21 of the second connection assembly 20 is inserted into the insertion hole 111 to define the relative position of the first connection assembly 10 and the second connection assembly 20. This insertion fit relationship allows that the first connection assembly is equivalent to the connecting female terminal, and the second connection assembly is equivalent to the connecting male terminal. This structure is more compact in height. In other embodiments, the insertion cylinder may also be arranged in the first connection assembly, and the insertion hole fit therewith is arranged in the second connection assembly, so that the first connection assembly is equivalent to the connecting male terminal and the second connection assembly is equivalent to the connecting female terminal.

The annular recess 211 or the plurality of recesses arranged on the insertion cylinder 21 may form a fit relationship with a plurality of balls of the locking member 122, so as to realize the locking function. After a plurality of balls protrude from the through hole to enter the annular recess 211 or the plurality of recesses, it is possible to restrict the sliding of the insertion cylinder 21 in the insertion hole 111, so as to realize the locking function. However, upon unlocking, the annular recess 211 or the plurality of recesses may exert a pressing effect on the plurality of balls to make them leave the restricting position, so as to smoothly realize the unlocking.

Referring to Figs. 5 to 7, in some embodiments, the inner walls of the plurality of through holes 112 are frustum-shaped, and a side walls of the annular recess 211 or side walls of the plurality of recesses are inclined outward relative to the bottom of the annular recess or the plurality of recesses. By setting the inner wall of the through hole as a frustum, and making the side walls of the annular recess 211 or the plurality of recesses inclined outward relative to the bottom, the inclined side walls and the inner wall of the through hole may exert a pressing force on the balls to make them move laterally away from the restricting position.

In order to avoid leakage of the plurality of balls from the plurality of through holes 112 on the inner wall of the insertion hole 111, referring to Fig. 7, in some embodiments, an opening size of each of the plurality of through holes 112 in the inner wall of the insertion hole 111 is smaller than a diameter of each of the plurality of balls located in the plurality of through holes 112 respectively. Here, the cross-section of the through hole is preferably circular, and correspondingly, the diameter of the circular cross-section of the through hole on the inner wall of the insertion hole 111 is smaller than the diameter of the ball. The cross-section of the through hole may also be other shapes, such as ellipse or polygon, so that the size of the through hole in at least one direction of the inner wall of the insertion hole 111 needs to be smaller than the diameter of the ball so as to block the ball from passing through the through hole and falling into the insertion hole 111.

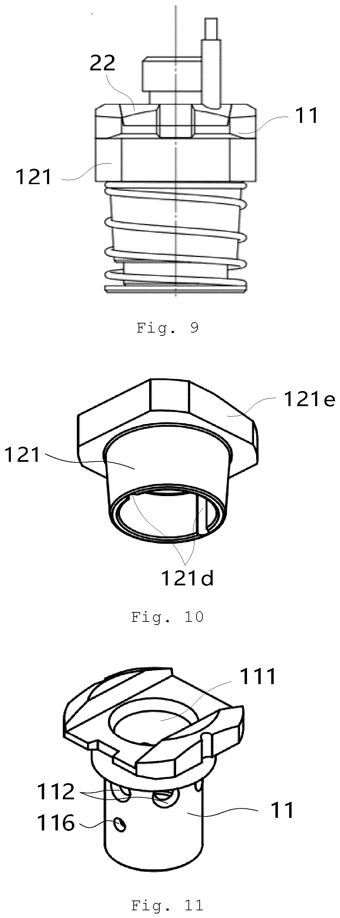

Fig. 8 is a schematic view of not fully inserting an insertion cylinder into an insertion hole in some embodiments of a connector according to the present disclosure. Fig. 9 is a schematic view of fully inserting an insertion cylinder into an insertion hole in some embodiments of a connector according to the present disclosure.

Referring to Figs. 4, 8 and 9, in some embodiments, the first connection portion includes an insertion hole 111 located at the end on one side of the connection seat 11 adjacent to the second connection assembly 20, and the second connection assembly 20 has an insertion cylinder 21 and a support flange 22 fixedly connected with the insertion cylinder 21. The support flange 22 is configured to abut against the end when the insertion cylinder 21 is inserted into a set position of the insertion hole 111.

By fixedly connecting the support flange 22 to the insertion cylinder 21, the insertion position may be defined by an abutting fit between the support flange 22 and the end of the connection seat 11, and this insertion position may correspond to a specific position where the locking member 122 locks the second connector assembly 20.

In Fig. 4, the end may have a non-circular cross-section groove 113, and the support flange 22 is embedded in the non-circular cross-section groove 113 in a state of abutting against the end, and in contact with the side wall surface of the non-circular cross-section groove 113. The cross-section of the non-circular cross-section groove 113 may be a polygon such as a rectangle or a hexagon, and may also be a shape such as an ellipse.

A non-circular cross-section groove 113 is provided at the end of the connection seat 11, and the support flange 22 is embedded in the non-circular cross-section groove 113 to limit the degree of freedom of the relative rotation of the insertion cylinder 21 and the insertion hole 111, so as to avoid that the second connection assembly 20 rotates around the axis of the insertion cylinder 21 when connected to the first connection assembly 10.

Referring to Fig. 8, in some embodiments, the side wall 113a of the non-circular cross-section groove 113 is inclined outward relative to the bottom. In order to facilitate that the support flange 22 is accurately embedded into the non-circular cross-section groove 113 at the end of the connection seat 11, the guiding and automatic aligning function of the support flange 22 may be realized by inclining the side wall 113a outward relative to the bottom. In Fig. 8, the support flange 22 may have a side wall 222 fit with the side wall 113 inclined outwards. When the insertion cylinder is well inserted into the insertion hole in Fig. 9, the side wall 22 is closely attached to the side wall 113, so that their bonding is more stable and reliable.

Fig. 10 is a schematic structural view of a locking seat in some embodiments of a connector according to the present disclosure. Fig. 11 is a schematic structural view of a connection seat in some embodiments of a connector according to the present disclosure. Referring to Figs. 10 and 11, in some embodiments, a slide guiding structure is provided between the inner wall of the locking seat 121 and the outer wall of the connection seat 11. The slide guiding structure may guide the sliding direction s of the locking seat 121 relative to the connection seat 11, and maintain the stability of the relative sliding between the locking seat 121 and the connection seat 11.

In Fig. 10, the slide guiding structure may include: at least one elongated groove 121d arranged on the inner wall of the locking seat 121, and an extending direction of the elongated groove 121d being parallel to the sliding direction s of the locking seat 121 relative to the connection seat 11. Referring to Figs. 5 to 7 and 11, the slide guiding structure may further include: at least one lug fixedly arranged on the outer wall of the connection seat 11 and slidably fit with the at least one elongated groove 121d; and/or at least one bead 15 rotatably arranged in at least one hole on the outer wall of the connection seat 11 and scrollably fit with the at least one elongated groove 121d.

The fit between the lug and/or the ball and the elongated groove 121d may realize an effective guiding function, and in addition to the elongated groove 121d, the slide guiding structure may include only a lug or a bead or both a lug and a bead. The lug may form a stable sliding fit relationship with the elongated groove 121d. The ball may form a smooth rolling fit relationship with the elongated groove 121d.

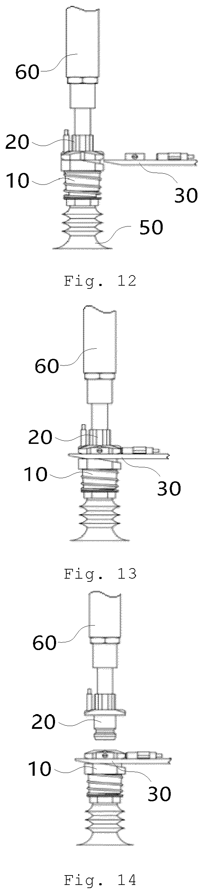

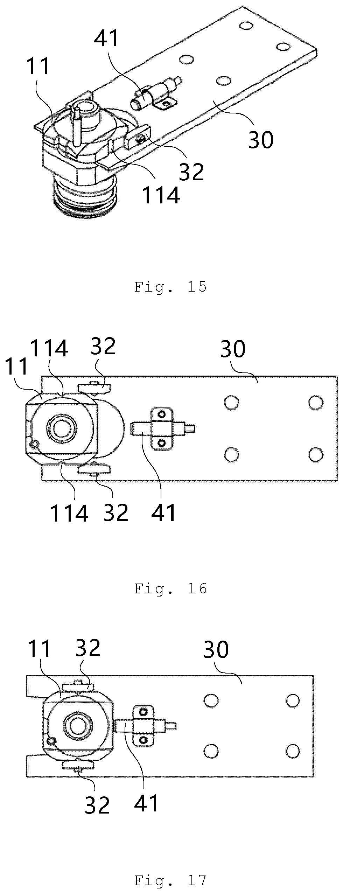

Figs. 12 to 14 are respectively schematic views of three states in which the end effector device is placed into the holder and the end effector device is separated when a robot arm is connected in some embodiments of an end effector device according to the present disclosure. Fig. 15 is a schematic perspective view of entering a U-shaped notch of the holder in some embodiments of an end effector device according to the present disclosure. Figs. 16 to 17 are respectively schematic views of a top view angle of not fully entering a U-shaped notch and fully entering a U-shaped notch respectively in some embodiments of an end effector device according to the present disclosure.

Referring to Fig. 3 and Figs. 12 to 17, in some embodiments, the connector further includes: a holder 30. The holder 30 has at least one U-shaped notch 31 configured to realize the connection between the holder 30 and the first connection assembly 10 after being entered by the first connection assembly 10 and to realize the disconnection between the holder 30 and the first connection assembly 10 after the first connection assembly 10 leaves.

The holder 30 which may serve as a part of the connector, is connected with one or more first connection assemblies 10 through the U-shaped notch 31. When the first connection assembly 10 needs to be replaced, the second connection assembly 20 may be connected with any first connection assembly 10 connected with the U-shaped notch 31 and disconnected from the U-shaped notch 31 together. The holder 30 may accommodate a plurality of first connection assemblies 10 through a plurality of U-shaped notches 31, so as not to be interfered by other mechanisms than the holder 30.

In order to allow that the first connection assembly 10 is stably retained in the U-shaped notch 31 so as not to fall off easily, referring to Fig. 3, in some embodiments, the holder 30 has at least one limiting structure configured to limit the motion of the first connection assembly 10 in the U-shaped notch 31 after the first connection assembly 10 enters the U-shaped notch 31. The motion of the first connection assembly 10 in the U-shaped notch 31 after the first connection assembly 10 enters the U-shaped notch 31 is limited by providing a limiting mechanism.

Referring to Figs. 3 to 4 and Figs. 16 to 17, in some embodiments, the first connection assembly 10 includes a connection seat 11 having two sides parallel to an entering direction of the U-shaped notch 31, and at least one of the two sides has a concave structure 114. The limiting structure includes: a spring bead mechanism 32 located on at least one side of the U-shaped notch 31, and the spring bead mechanism 32 is configured to be embedded into the concave structure 114 after the first connection assembly 10 enters the U-shaped notch 31.

Considering that in addition to limiting the motion of the first connection assembly 10 to prevent that the uniformity is affected when the first connection assembly 10 is repeatedly positioned due to vibration and the like, it is also necessary to allow that the first connection assembly 10 leaves the U-shaped notch 31 after the second connection assembly 20 is connected, thereby realizing the fit with the concave structure 114 on the connection seat 11 by the spring bead mechanism 32. The motion of the first connection assembly 10 in the U-shaped notch 31 is limited by the restriction of the concave structure 114 on the ball, and the ball is allowed to withdraw from the concave structure 114 by the property that the spring is retracted under compression, without affecting that the first connection assembly 10 leaves the U-shaped notch 31.

In order to enable that the first connection assembly 10 is connected in a correct orientation when connected to the holder 30, referring to Fig. 3 and Figs. 12 to 17, in some embodiments, the connector further includes: a first sensor 41. The first sensor 41 is arranged on the holder 30 and configured to detect at least the first connection assembly 10 entering the U-shaped notch 31, so as to determine whether the first connection assembly 10 enters the U-shaped notch 31 at a correct angle.

A first sensor 41 is provided on the holder 30 to detect the first connection assembly 10 entering the U-shaped notch 31, and if the entering direction of the first connection assembly 10 is incorrect, an alarm will be alerted in time. The first sensor 41 may also be configured to detect whether the first connection assembly 10 is in place or present, so as to prevent misplacement during manual maintenance. The first sensor 41 may be a non-contact sensor based on the principles such as light, electricity and ultrasound, and may also be a contact sensor.

Referring to Figs. 3 to 4 and Figs. 16 to 17, in some embodiments, the structure when the connection seat 11 and the support flange 22 are in an abutting state has an anterior structure and an posterior structure that are asymmetrical in an entering direction of the U-shaped notch 31 (refer to the black bold solid arrow in Fig. 3).

By providing the anterior structure and the posterior structure of the support flange 22 to be asymmetrical, the first sensor 41 may sense a difference between the first connection assemblies 10 entering in different directions according to this asymmetrical relationship, and use this difference to identify whether the first connection assembly 10 correctly enters the U-shaped notch 31.

In Fig. 4, the posterior structure of the connection seat 11 and the support flange 22 in an entering direction of the U-shaped notch 31 may have concave notches 115 and 221. Specifically, the posterior structure of the connection seat 11 and the support flange 22 may be provided with concave notches 115 and 221, while the anterior structure may not be provided with concave notches 115 and 221. Correspondingly, when the first sensor 41 senses the first connection assembly 10, the posterior structure with concave notches 115 and 221 is farther away from the first sensor 41, so that the first sensor 41 may effectively identify whether the entering direction of the first connection assembly 10 is correct.

Whether the first connection assembly 10 and the second connection assembly 20 are effectively connected is related to the reliability of the connector during operation. Referring to Fig. 4 and Figs. 12 to 14, in some embodiments, the connector further includes: a second sensor 42. The second sensor 42 is arranged on the second connection assembly 20 and configured to detect the first connection assembly 10 so as to determine whether the first connection assembly 10 is connected with the second connection assembly 20.

The second sensor 42 on the second connection assembly 20 directly detect the first connection assembly 10 to determine whether the second connection assembly 20 and the first connection assembly 10 are effectively connected. The second sensor 42 may be a non-contact sensor based on the principles such as light, electricity and ultrasound, and may also be a contact sensor.

For the application scenario where the connector is used to pick up an object with a relatively flat surface, a suction cup structure may be used to suck the object. Referring to Figs. 6 and 7, in some embodiments, the first connection assembly 10 has a first cavity structure 111a, and the second connection assembly 20 has a second cavity structure 212, and the first cavity structure 111a and the second cavity structure 212 communicate with each other in a connected state of the second connection assembly 20 and the first connection assembly 10. In this way, the first cavity structure 111a and the second cavity structure 212 may form an air path of the suction cup structure, so as to realize the vacuum suction function of the suction cup structure.

For the specific arrangement of the first cavity structure 111a and the second cavity structure 212, referring to Figs. 6 and 7, in some embodiments, the second connection assembly 20 includes an insertion cylinder 21 having the second cavity structure 212. The first connection assembly 10 includes: a connection seat 11, a sealing gasket 16 and a base support 14. The connection seat 11 has an insertion hole 111 for accommodating the insertion cylinder 21. The sealing gasket 16 is located in the insertion hole 111. The base support 14 is connected with the connection seat 11, and located on one side of the sealing gasket 16 away from the insertion cylinder 21. The base support 14 has the first cavity structure 111a, and the base support 14 and the insertion cylinder 21 abut against end faces on opposite sides of the sealing gasket 16 respectively.

For this insertion fit structure between the insertion cylinder 21 and the insertion hole 111, the second cavity structure 212 is arranged in the insertion cylinder 21, the first cavity structure 111a is arranged on the base support 14 connected with the connection seat 11, and the air path is sealed by the sealing gasket 16 in the insertion hole 111, thereby ensuring a stable and reliable vacuum suction effect.

Various embodiments of the aforementioned connector may be applied to various apparatuses or devices that need to realize detachable connection. The mechanical structure based on this connector does not need to rely on a driving function of the power mechanism, which is more cost-saving and also convenient in use.

Based on various embodiments of the aforementioned connector, the present disclosure provides an end effector device. The end effector device includes: any of the aforementioned embodiments of a connector and a pickup mechanism 50. The pickup mechanism 50 is connected with a first connection assembly 10 of the connector. By applying the aforementioned connector to the end effector device so that the first connection assembly 10 is connected with the pickup mechanism 50, a plurality of first connection assemblies 10 and a pickup mechanisms 50 connected therewith may be quickly replaced relative to the second connection assembly 20.

In some embodiments, the pickup mechanism 50 includes a suction cup or a suction cup group. For the application scenario where the connector is used to pick up an object with a relatively flat surface, the suction cup structure may be used to suck the object. The suction cup group may include at least two suction cups connected in parallel.

The aforementioned end effector device may be applied to various devices or systems that need to perform a pickup operation, and may realize quick replacement of a pickup mechanism. Based on various embodiments of the aforementioned end effector device, the present disclosure provides a sorting equipment. The sorting equipment includes: any of the aforementioned embodiments of an end effector device and a robot arm 60. The robot arm 60 is connected with the second connection assembly 20 of the connector of the end effector device and configured to cause the second connection assembly 20 to be connected with or disconnected from any first connection assembly 10 of the connector.

By applying the aforementioned end effector device to a sorting equipment so that the robot arm 60 is connected with the second connection assembly 20, the first connection assembly 10 and its connected pickup mechanism 50 may be quickly replaced through the motion of the robot arm 60, so as to accurately pick up, convey and release an object to be picked up. In other embodiments, the robot arm may also be connected with the first connection assembly and drive the first connection assembly to move so as to connect the second connection assembly.

Referring to Figs. 1 to 17 and the aforementioned embodiments, the embodiment of the present disclosure also provides an end effector quick-replace member. The end effector quick-replace member includes a connection seat 11, a locking seat 121 and a locking member 122. The connection seat 11 has a first connection portion. The locking seat 121 is slidably connected with the connection seat 11. The locking member 122 is arranged between the locking seat 121 and the connection seat 11. The locking seat 121 is configured to drive the locking member 122 to lock or unlock the end effector adapter connected with the first connection portion by means of a motion relative to the connection seat 11.

In some embodiments, the locking seat 121 has a first sliding position S1 and a second sliding position S2 in the sliding direction s relative to the connection seat 11, and there is a gap g for entering of a holder 30 between the connection seat 11 and the locking seat 121 at the first sliding position S1, and the locking seat 121 abuts against the connection seat 11 at the second sliding position S2. Correspondingly, the end effector quick-replace member further includes: an elastic member 13 connected with the locking seat 121 and configured to cause the locking seat 121 to slide from the first sliding position S1 to the second sliding position S2 when the holder 30 is detached from the gap g.

In some embodiments, the locking seat 121 has a wedge-shaped surface 121a inclined relative to the sliding direction s of the locking seat 121 and the connection seat 11, and a position of the locking member 122 relative to the locking seat 121 and a end effector adapter is adjusted by pushing the locking member 122 by the wedge-shaped surface 121a, so as to realize locking or unlocking of the end effector adapter by the locking member 122.

In some embodiments, the first connection portion includes an insertion hole 111 located at an end of the connection seat 11, the locking seat 121 is sleeved outside the connection seat 11, the wedge-shaped surface 121a is located on an inner wall of the locking seat 121 adjacent to the connection seat 11, and the locking member 122 is located between the inner wall of the locking seat 121 and an outer wall of the connection seat 11.

In some embodiments, the connection seat 11 has a plurality of through holes 112 penetrating through the hole wall of the insertion hole 111, and the locking member 122 includes a plurality of balls arranged in the through holes 112 respectively. The inner wall of the locking seat 121 is divided into an avoidance area 121b and a restriction area 121c in the sliding direction s by the wedge-shaped surface 121a. The restriction area 121c is configured to cause the plurality of balls protrude from the plurality of through holes 112 when abutting against the plurality of balls, so as to lock the position of the end effector adapter in the insertion hole 111. The avoidance area 121b is configured to allow the plurality of balls to retreat from the plurality of through holes 112 when abutting against the plurality of balls, so as to avoid the end effector adapter when the end effector adapter leaves the insertion hole 111.

In some embodiments, in the direction perpendicular to a sliding direction s, a distance from the avoidance area 121b to the connection seat 11 is greater than a distance from the restriction area 121c to the connection seat 11.

In some embodiments, inner walls of the plurality of through holes 112 are frustum-shaped.

In some embodiments, an opening size of each of the plurality of through holes 112 in the inner wall of the insertion hole 111 is smaller than a diameter of each of the plurality of balls located in the plurality of through holes 112 respectively.

In some embodiments, a slide guiding structure is provided between the inner wall of the locking seat 121 and the outer wall of the connection seat 11.

In some embodiments, the slide guiding structure includes: at least one elongated groove 121d arranged on the inner wall of the locking seat 121, and an extending direction of the elongated groove 121d being parallel to the sliding direction s of the locking seat 121 relative to the connection seat 11. The slide guiding structure further includes: at least one lug fixedly arranged on the outer wall of the connection seat 11 and slidably fit with the at least one elongated groove 121d; and/or at least one bead 15 rotatably arranged in at least one hole on the outer wall of the connection seat 11 and scrollably fit with the at least one elongated groove 121d.

In some embodiments, the end has a non-circular cross-section groove 113.

In some embodiments, the side wall of the non-circular cross-section groove 113 is inclined outward relative to a bottom of the non-circular section groove 113.

In some embodiments, the end effector quick-replace member further includes: a pickup mechanism 50 connected with one side of the connection seat 11 away from the end.

In some embodiments, the end effector quick-replace member further includes: a sealing gasket 16 arranged in the insertion hole 111 and abutting against the pickup mechanism 50.

Referring to Figs. 1 to 17 and the aforementioned embodiments, the embodiment of the present disclosure further includes an end effector adapter for selective connection with at least one end effector quick-replace member located on the holder 30, wherein the end effector quick-replace member is the aforementioned end effector quick-replace member.

In some embodiments, the pickup connector includes: an insertion cylinder 21 and a support flange 22. The insertion cylinder 21 is configured to connect the end effector quick-replace member. The support flange 22 is fixedly connected with the insertion cylinder 21.

For the effects of various embodiments of the above-described end effector quick-replace member and end effector adapter, reference may be made to the description of the above-described embodiments of the connector and the end effector device, which will not be described in detail here.

An example of the process of replacing the end effector device in the sorting equipment will be briefly described below with reference to Figs. 1 to 17.

The extremity of the robot arm in the sorting equipment may be connected with an end effector adapter, the platform is provided with a plurality of holders, and the U-shaped notch of each holder may be provided with an end effector quick-replace member. When the sorting equipment needs to be connected with an end effector quick-replace member to perform a pickup operation, the end effector adapter may be moved directly above a certain end effector quick-replace member to be connected through the robot arm. Then, the insertion cylinder is inserted into the insertion hole in the connection seat of the end effector quick-replace member from top to bottom. At this time, since the holder is located in the gap formed between the connection seat and the locking seat, the plurality of balls included in the locking member are located in the avoidance area on the inner wall of the locking seat at this time, without affecting that the insertion cylinder slides in the insertion hole.

The robot arm exerts a lateral force on the end effector adapter to leave the U-shaped notch. Along with the leaving action, the holder gradually withdraws from the gap between the connection seat and the locking seat, and the locking seat slides upward under the action of the spring to abut against the connection seat. During this sliding process, the wedge-shaped surface of the inner wall of the locking seat pushes the locking member to move inward, and reach the restriction area. The restriction area of the inner wall of the locking seat pushes the locking member against the through hole arranged on the insertion hole and enters the annular recess arranged on the insertion cylinder, so as to lock the insertion cylinder in the insertion hole.

When it is necessary to convey the end effector quick-replace member connector to the U-shaped notch of the holder, the robot arm aligns the end effector quick-replace member with the U-shaped notch from the outside of the U-shaped notch. Then, a lateral force is applied to the end effector quick-replace member to make it enter the U-shaped notch, and both sides of the U-shaped notch are elbowed into the gap between the locking seat and the connection seat. In order to facilitate entering of both sides of the U-shaped notch, the open side of the holder adjacent to the U-shaped notch may have a gradually thinning structure, so as to facilitate entering the gap. At the same time, a guiding structure which facilitates entering of the holder may also be provided at the position of the locking seat adjacent to the connection seat. By gradually increasing the gap, the locking member reaches the avoidance area, so that a restriction effect on the insertion column is no longer formed. At this time, the robot arm may pull out the insertion column upwards.

Hereto, various embodiments of the present disclosure have been described in detail. Some details well known in the art are not described in order to avoid obscuring the concept of the present disclosure. According to the above description, those skilled in the art would fully understand how to implement the technical solutions disclosed here.

Although some specific embodiments of the present disclosure have been described in detail by way of examples, those skilled in the art should understand that the above examples are only for an illustrative purpose, rather than limiting the scope of the present disclosure. It should be understood by those skilled in the art that modifications to the above embodiments and equivalent replacements to some technical features may be made without departing from the scope and spirit of the present disclosure. The scope of the present disclosure is defined by the appended claims.

## Claims

1. A connector, comprising:
at least one first connection assembly (10) having a locking structure (12) and capable of realizing a detachable connection with a holder (30); and
a second connection assembly (20) detachably connected with the first connection assembly (10);
wherein the locking structure (12) is configured to lock the second connection assembly (20) connected with the first connection assembly (10) in a state that the first connection assembly (10) is disconnected from the holder (30), and to unlock the second connection assembly (20) connected with the first connection assembly (10) in a state that the first connection assembly (10) is connected with the holder (30).

2. The connector according to claim 1, wherein the first connection assembly (10) comprises:
a connection seat (11) having a first connection portion connected with the second connection assembly (20);
wherein the locking structure (12) comprises: a locking seat (121) and a locking member (122), wherein the locking seat (121) is slidably connected with the connection seat (11), and the locking member (122) is arranged between the locking seat (121) and the connection seat (11), and the locking seat (121) is moveable relative to the connection seat (11) to drive the locking member (122) to lock or unlock the second connection assembly (20).

3. The connector according to claim 2, wherein the locking seat (121) has a first sliding position (S1) in a sliding direction (s) relative to the connection seat (11), and there is a gap (g) between the connection seat (11) and the locking seat (121) at the first sliding position (S1) so that the holder (30) is connected with the first connection assembly (10) within the gap (g).

4. The connector according to claim 2 or 3, wherein the locking seat (121) has a second sliding position (S2) in the sliding direction (s) relative to the connection seat (11), and abuts against the connection seat (11) at the second sliding position (S2) when the first connection assembly (10) is disconnected from the holder (30).

5. The connector according to claim 3, wherein the locking seat (121) further has a second sliding position (S2) in the sliding direction (s) relative to the connection seat (11), and the first connection assembly (10) further comprises:
an elastic member (13) connected with the locking seat (121) and configured to cause the locking seat (121) to slide from the first sliding position (S1) to the second sliding position (S2) when the holder (30) is detached from the gap (g).

6. The connector according to claim 5, wherein the first connection assembly (10) further comprises a base support (14) connected with the connection seat (11), and the base support (14) has a flange (141) protruding outwards radially relative to the connection seat (11); the elastic member (13) comprises a spring sleeved outside the locking seat (121), one end of the spring is connected to the locking seat (121), and the other end is connected to the flange (141) of the base support (14).

7. The connector according to any one of claims 2 to 6, wherein the locking seat (121) has a wedge-shaped surface (121a) inclined relative to the sliding direction (s) of the locking seat (121) and the connection seat (11), and the wedge-shaped surface (121a) pushes the locking member (122) to adjust a position of the locking member (122) relative to the locking seat (121) and the second connection assembly (20) so as to realize locking or unlocking of the second connection assembly (20) by the locking member (122).

8. The connector according to claim 7, wherein the first connection portion comprises an insertion hole (111), which is located at an end on one side of the connection seat (11) adjacent to the second connection assembly (20), the locking seat (121) is sleeved outside the connection seat (11), the wedge-shaped surface (121a) is located on an inner wall of the locking seat (121) adjacent to the connection seat (11), and the locking member (122) is located between the inner wall of the locking seat (121) and an outer wall of the connection seat (11).

9. The connector according to claim 8, wherein the connection seat (11) has a plurality of through holes (112) penetrating through a hole wall of the insertion hole (111), the locking member (122) comprises a plurality of balls arranged in the through holes (112) respectively, and the inner wall of the locking seat (121) is divided into an avoidance area (121b) and a restriction area (121c) by the wedge surface (121a) in the sliding direction (s), the restriction area (121c) is configured to cause the plurality of balls protrude from the plurality of through holes (112) when abutting against the plurality of balls, so as to lock a position of the second connection assembly (20) in the insertion hole (111), and the avoidance area (121b) is configured to allow the plurality of balls to retreat from the plurality of through holes (112) when abutting against the plurality of balls, so as to avoid the second connection assembly (20) when the second connection assembly (20) leaves the insertion hole (111).

10. The connector according to claim 9, wherein in a direction perpendicular to the sliding direction (s), a distance from the avoidance area (121b) to the connection seat (11) is greater than a distance from the restriction area (121c) to the connection seat (11) .

11. The connector according to claim 9 or 10, wherein the second connection assembly (20) has an insertion cylinder (21) comprising an annular recess (211) that is continuous in a circumferential direction or a plurality of recesses that is distributed discretely in a circumferential direction, and the annular recess (211) or the plurality of recesses are configured to align with the plurality of through holes (112) when the insertion cylinder (21) is inserted into a set position of the insertion hole (111), so that the plurality of balls protrude from the plurality of through holes (112) after being abutted by the restriction area (121c), and then enter the annular recess (211) or the plurality of recesses, so as to lock the second connection assembly (20).

12. The connector according to claim 11, wherein inner walls of the plurality of through holes (112) are frustum-shaped, and a side wall of the annular recess (211) or side walls of the plurality of recesses are inclined outward relative to a bottom of the annular recess (211) or the plurality of recesses.

13. The connector according to any one of claims 9 to 12, wherein an opening size of each of the plurality of through holes (112) in the inner wall of the insertion hole (111) is smaller than a diameter of each of the plurality of balls located in the plurality of through holes (112) respectively.

14. The connector according to any one of claims 8 to 13, wherein a slide guiding structure is provided between the inner wall of the locking seat (121) and the outer wall of the connection seat (11).

15. The connector according to claim 14, wherein the slide guiding structure comprises:
at least one elongated groove (121d) arranged on the inner wall of the locking seat (121), and an extending direction of the elongated groove (121d) being parallel to the sliding direction (s) of the locking seat (121) relative to the connection seat (11);
wherein the slide guiding structure further comprises:
at least one lug fixedly arranged on the outer wall of the connection seat (11) and slidably fit with the at least one elongated groove (121d); and/or
at least one bead (15) rotatably arranged in at least one hole on the outer wall of the connection seat (11) and scrollably fit with the at least one elongated groove (121d).

16. The connector according to any one of claims 2 to 15, wherein the first connection portion comprises an insertion hole (111), which is located at an end on one side of the connection seat (11) adjacent to the second connection assembly (20), and the second connection assembly (20) has an insertion cylinder (21) and a support flange (22) fixedly connected with the insertion cylinder (21), and the support flange (22) is configured to abut against the end when the insertion cylinder (21) is inserted into a set position of the insertion hole (111).

17. The connector according to claim 16, wherein the end has a non-circular cross-section groove (113), and the support flange (22) is embedded into the non-circular cross-section groove (113) in a state of abutting against the end, and in contact with a side wall surface of the non-circular cross-section groove (113).

18. The connector according to claim 17, wherein a side wall of the non-circular cross-section groove (113) is inclined outward relative to a bottom of the non-circular cross-section groove (113).

19. The connector according to any one of claims 1 to 18, further comprising:
a holder (30) provided with at least one U-shaped notch (31), wherein the U-shaped notch (31) is configured to realize the connection between the holder (30) and the first connection assembly (10) after being entered by the first connection assembly (10) and realize the disconnection between the holder (30) and the first connection assembly (10) after the first connection assembly (10) leaves.

20. The connector according to claim 19, wherein the holder (30) has at least one limiting structure configured to limit a motion of the first connection assembly (10) in the U-shaped notch (31) after the first connection assembly (10) enters the U-shaped notch (31).

21. The connector according to claim 20, wherein the first connection assembly (10) comprises a connection seat (11) having two sides parallel to an entering direction of the U-shaped notch (31), and at least one of the two sides has a concave structure (114) ;
the limiting structure comprises a spring bead mechanism (32) located on at least one side of the U-shaped notch (31), and the spring bead mechanism (32) is configured to be embedded into the concave structure (114) after the first connection assembly (10) enters the U-shaped notch (31).

22. The connector according to any one of claims 19 to 21, further comprising:
a first sensor (41) arranged on the holder (30) and configured to detect at least the first connection assembly (10) entering the U-shaped notch (31) to determine whether the first connection assembly (10) enters the U-shaped notch (31) at a correct angle.

23. The connector according to claim 22, wherein the first connection assembly (10) comprises a connection seat (11), the second connection assembly (20) comprises a support flange (22), and an structure when the connection seat (11) and the support flange (22) are in an abutting state has an anterior structure and an posterior structure that are asymmetrical in an entering direction of the U-shaped notch (31).

24. The connector according to claim 23, wherein a posterior structure of the connection seat (11) and the support flange (22) in the entering direction of the U-shaped notch (31) has a concave notch (115, 221).

25. The connector according to any one of claims 1 to 24, further comprising:
a second sensor (42) arranged on the second connection assembly (20) and configured to detect the first connection assembly (10) to determine whether the first connection assembly (10) is connected with the second connection assembly (20).

26. The connector according to any one of claims 1 to 25, wherein the first connection assembly (10) has a first cavity structure (111a), the second connection assembly (20) has a second cavity structure (212), and the first cavity structure (111a) and the second cavity structure (212) communicate with each other in a connected state of the second connection assembly (20) and the first connection assembly (10).

27. The connector according to claim 26, wherein the second connection assembly (20) comprises an insertion cylinder (21) having the second cavity structure (212); and the first connection assembly (10) comprises:
a connection seat (11) provided with an insertion hole (111) for accommodating the insertion cylinder (21);
a sealing gasket (16) located in the insertion hole (111); and
a base support (14) connected with the connection seat (11) and located on one side of the sealing gasket (16) away from the insertion cylinder (21),
wherein the base support (14) has the first cavity structure (111a), and the base support (14) and the insertion cylinder (21) abut against end faces on opposite sides of the sealing gasket (16) respectively.

28. An end effector device, comprising:
the connector according to any one of claims 1 to 27; and
a pickup mechanism (50) connected with the first connection assembly (10) of the connector.

29. The end effector device according to claim 28, wherein the pickup mechanism (50) comprises a suction cup or a suction cup group.

30. A sorting equipment, comprising:
the end effector device according to claim 28 or 29; and
a robot arm (60) connected with a second connection assembly (20) of the connector of the end effector device and configured to cause the second connection assembly (20) to be connected to or disconnected from any first connection assembly (10) of the connector.

31. An end effector quick-replace member, comprising:
a connection seat (11) having a first connection portion;
a locking seat (121) slidably connected with the connection seat (11); and
a locking member (122) arranged between the locking seat (121) and the connection seat (11);
wherein the locking seat (121) is configured to drive the locking member (122) to lock or unlock an end effector adapter connected with the first connection portion by means of a motion relative to the connection seat (11).

32. The end effector quick-replace member according to claim 31, wherein the locking seat (121) has a first sliding position (S1) and a second sliding position (S2) in a sliding direction (s) relative to the connection seat (11), and there is a gap (g) for entering of a holder (30) between the connection seat (11) and the locking seat (121) at the first sliding position (S1), and the locking seat (121) abuts against the connection seat (11) at the second sliding position (S2);
the end effector quick-replace member further comprises:
an elastic member (13) connected with the locking seat (121) and configured to cause the locking seat (121) to slide from the first sliding position (S1) to the second sliding position (S2) when the holder (30) is detached from the gap (g).

33. The end effector quick-replace member according to claim 31 or 32, wherein the locking seat (121) has a wedge-shaped surface (121a) inclined relative to the sliding direction (s) of the locking seat (121) and the connection seat (11), and the wedge-shaped surface (121a) pushes the locking member (122) to adjust a position of the locking member (122) relative to the locking seat (121) and the end effector adapter so as to realize locking or unlocking of the end effector adapter by the locking member (122).

34. The end effector quick-replace member according to claim 33, wherein the first connection portion comprises an insertion hole (111) located at an end of the connection seat (11), the locking seat (121) is sleeved outside the connection seat (11), the wedge-shaped surface (121a) is located on an inner wall of the locking seat (121) adjacent to the connection seat (11), and the locking member (122) is located between the inner wall of the locking seat (121) and an outer wall of the connection seat (11).

35. The end effector quick-replace member according to claim 34, wherein the connection seat (11) has a plurality of through holes (112) penetrating through a hole wall of the insertion hole (111), the locking member (122) comprises a plurality of balls arranged in the through holes (112) respectively, and the inner wall of the locking seat (121) is divided into an avoidance area (121b) and a restriction area (121c) by the wedge surface (121a) in the sliding direction (s), the restriction area (121c) is configured to cause the plurality of balls protrude from the plurality of through holes (112) when abutting against the plurality of balls, so as to lock the position of the end effector adapter in the insertion hole (111), and the avoidance area (121b) is configured to allow the plurality of balls to retreat from the plurality of through holes (112) when abutting against the plurality of balls, so as to avoid the end effector adapter when the end effector adapter leaves the insertion hole (111).

36. The end effector quick-replace member according to claim 35, wherein in a direction perpendicular to the sliding direction (s), a distance from the avoidance area (121b) to the connection seat (11) is greater than a distance from the restriction area (121c) to the connection seat (11).

37. The end effector quick-replace member according to claim 35 or 36, wherein inner walls of the plurality of through holes (112) are frustum-shaped.

38. The end effector quick-replace member according to any one of claims 35 to 37, wherein an opening size of each of the plurality of through holes (112) in the inner wall of the insertion hole (111) is smaller than a diameter of each of the plurality of balls located in the plurality of through holes (112) respectively.

39. The end effector quick-replace member according to any one of claims 34 to 38, wherein a slide guiding structure is provided between the inner wall of the locking seat (121) and the outer wall of the connection seat (11).

40. The end effector quick-replace member according to claim 39, wherein the slide guiding structure comprises:
at least one elongated groove (121d) arranged on the inner wall of the locking seat (121), and an extending direction of the elongated groove (121d) being parallel to the sliding direction of the locking seat (121) relative to the connection seat (11);
wherein the slide guiding structure further comprises:
at least one lug fixedly arranged on the outer wall of the connection seat (11) and slidably fit with the at least one elongated groove (121d); and/or
at least one bead (15) rotatably arranged in at least one hole on the outer wall of the connection seat (11) and scrollably fit with the at least one elongated groove (121d).

41. The end effector quick-replace member according to any one of claims 34 to 40, wherein the end has a non-circular section groove (113).

42. The end effector quick-replace member according to claim 41, wherein a side wall of the non-circular section groove (113) is inclined outward relative to a bottom of the non-circular section groove (113).

43. The end effector quick-replace member according to any one of claims 34 to 42, further comprising:
a pickup mechanism (50) connected with one side of the connection seat (11) away from the end.

44. The end effector quick-replace member according to claim 43, further comprising:
a sealing gasket (16) arranged in the insertion hole (111) and abutting against the pickup mechanism (50).

45. An end effector adapter for selective connection with at least one end effector quick-replace member located on a holder (30), wherein the end effector quick-replace member is the end effector quick-replace member according to any one of claims 31 to 44.

46. The pickup connector according to claim 45, comprising:
an insertion cylinder (21) configured to connect the end effector quick-replace member; and
a support flange (22) fixedly connected with the insertion cylinder (21).
